(19) Europäisches Patentamt European Patent Office Office européen des brevets

(11) **EP 2 642 801 B1**

(12) **EUROPÄISCHE PATENTSCHRIFT**

(45) Veröffentlichungstag und Bekanntmachung des Hinweises auf die Patenterteilung:
**16.09.2015  Patentblatt 2015/38**

(51) Int Cl.:
**H04W 52/02** *(2009.01)*   *H04W 76/04* *(2009.01)*

(21) Anmeldenummer: **12161013.3**

(22) Anmeldetag: **23.03.2012**

(54) **Verfahren zur Bildung einer funkgesteuerten Telekommunikationsverbindung mit mehreren Basisstationen sowie funkgesteuerte Telekommunikationsverbindung**

Method for forming a wireless controlled telecommunications connection with multiple base stations and wireless controlled telecommunications connection

Procédé de formation d'une liaison de télécommunication commandée par radio et dotée de plusieurs stations de base ainsi que liaison de télécommunication commandée par radio

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2013  Patentblatt 2013/39**

(73) Patentinhaber: **Gigaset Communications GmbH
40549 Düsseldorf (DE)**

(72) Erfinder:
- **Lenfort, Christoph
  46399 Bocholt (DE)**
- **Hülder, Stefan
  46286 Dorsten (DE)**
- **Koch, Stefan
  47559 Kranenburg (DE)**

(74) Vertreter: **Michalski Hüttermann & Partner Patentanwälte mbB
Speditionstraße 21
40221 Düsseldorf (DE)**

(56) Entgegenhaltungen:
**EP-A2- 0 896 487       WO-A1-02/07464
US-A1- 2009 290 561**

- **"Digital Enhanced Cordless Telecommunications (DECT); Common Interface (CI); Part 3: Medium Access Control (MAC) layer",
  EUROPEAN STANDARD, EUROPEAN TELECOMMUNICATIONS STANDARDS INSTITUTE (ETSI), 650, ROUTE DES LUCIOLES ;
  F-06921 SOPHIA-ANTIPOLIS ; FRANCE, Bd. DECT, Nr. V2.4.0, 1. Dezember 2011 (2011-12-01), XP014069117,**

**Beschreibung**

Die Erfindung betrifft ein Verfahren zum Betrieb zumindest eines Mobilteils mit zumindest zwei Basisstationen zur Bildung einer funkgesteuerten Telekommunikationsverbindung gemäß Oberbegriff des Anspruchs 1 sowie eine funkgesteuerte Telekommunikationsvorrichtung gemäß Oberbegriff des Anspruchs 8.

Funkgesteuerte Telekommunikationsvorrichtungen, die ein oder mehrere Basisstationen und ein oder mehrere Mobilteile umfassen, sind im Stand der Technik bekannt. Zur Kommunikation zwischen einem der Mobilteile und einer der Basisstationen ist die Verwendung von Verfahren bekannt, die eine Kombination aus einem Zeit-Multiplexverfahren (Time Division Multiple Access, TDMA) und einem Frequenz-Multiplexverfahren (Frequency Division Multiple Access, FDMA) umfassen. Ein solches Verfahren ist beispielsweise aus einem DECT-(Digital Enhanced Cordless Telecommunications) Derivatstandard bekannt.

Aus Gründen einer Bereitstellung einer ausreichenden Übertragungskapazität wird häufig mehr als eine Basisstation dazu eingesetzt, mit Mobilteilen, die in demselben Raumbereich angeordnet sind, zu kommunizieren.

Damit eine Kommunikationsverbindung zwischen dem zumindest einen Mobilteil und einer der Basisstationen eingerichtet werden kann, sind Funksignale erforderlich, um zwischen dem zumindest einen Mobilteil und den Basisstationen jeweils die gegenseitige Existenz und ggf. eine Bereitschaft zur Kommunikation anzuzeigen.

Das Erfordernis dieser Funksignale kann zu einer erhöhten spektralen Last und einem erhöhten Energieverbrauch des zumindest einen Mobilteils und/oder der Basisstationen führen.

Die internationale Veröffentlichung WO 02/07464 A1 beschreibt ein Verfahren zur Reduzierung des Energieverbrauchs einer Basisstation eines Telekommunikationsnetzwerks mit zellenförmiger Struktur. Das Telekommunikationsnetzwerk ist als UMTS-Netzwerk mit einem parallel existierenden GSM-Netzwerk ausgebildet und umfasst u.a. Funk-Netzwerkcontroller (Radio Network Controller), FunkBasisstationen (Radio Base Stations) und Mobilteile (Mobile Stations), die als Mobiltelefon oder als Pager ausgebildet sein können.

In Abhängigkeit von einer ermittelten Kapazitätsauslastung der Funkbasisstationen und hinterlegten Schwellwerten der Kapazitätsauslastung können Schritte zur Reduzierung des Energieverbrauchs ausgeführt werden, die unter anderem folgende Maßnahmen beinhalten:

-    Abschaltung zumindest eines Leistungsverstärkers,
-    Abschaltung zumindest einer Trägerfrequenz,
-    Abschaltung zumindest eines Sektors,
-    Verbringung zumindest einer Platine an der Funk-Basisstation in einen Bereitschaftsmodus, und
-    Verbringung zumindest eines Übertragungskanals der Funk-Basisstation in einen Bereitschaftsmodus.

Die Offenlegungsschrift US 2009/0290561 A1 beschreibt eine Methode zur Steuerung von Basisstationen in drahtlosen Kommunikationsnetzwerken mit zellenförmiger Struktur, insbesondere in Netzwerken gemäß DECT-, GSM- und GPRS- Standard, und eine Anordnung von zwei Basisstationen, die jeweils ein Funkteil und ein Empfangsteil aufweisen, wobei die Funkteile Funksignale in Raumbereiche aussenden, die sich teilweise überlappen, sowie mehrere Mobilteile, die ebenfalls Funksignale zu den Basisstationen aussenden können.

Die Methode beinhaltet, dass die Basisstationen in einen nicht aktiven Betriebszustand versetzt werden, in dem keine Funksignale ausgesendet werden, wenn kein Funksignal eines Mobilteils empfangen wird. In diesem nicht aktiven Betriebszustand ist das Empfangsteil weiterhin aktiv. Sendet anschließend ein Mobilteil ein Funksignal aus, dann wird das Funkteil der Basisstation aktiviert und sendet seinerseits ein Funksignal aus.

Es ist daher insbesondere die Aufgabe der Erfindung, ein Verfahren mit verringerter spektraler Last und verringertem Energieverbrauch anzugeben, das eine uneingeschränkte Verwendung des zumindest einen Mobilteils mit den zumindest zwei Basisstationen erlaubt, so dass die Übertragungskapazität unvermindert erhalten bleibt.

Gelöst wird diese Aufgabe mit einem Verfahren zum Betrieb zumindest eines Mobilteils mit einer von zumindest zwei Basisstationen, die jeweils ein Funkteil und ein Empfangsteil aufweisen, wobei die Funkteile sich zumindest teilweise überlappende Raumbereiche ausleuchten, zur Bildung einer funkgesteuerten Telekommunikationsverbindung unter Verwendung eines kombinierten TDMA/FDMA-Verfahrens, wobei eine zumindest teilweise Deaktivierung zumindest eines der Funkteile der zumindest zwei Basisstationen abhängig von einer ermittelten Kapazitätsauslastung der Basisstationen erfolgt.

Unter einem "ausgeleuchteten Raumbereich" soll in diesem Zusammenhang insbesondere ein Raum verstanden werden, der durch eine Fläche begrenzt wird, die in jedem ihrer Flächenpunkte dieselbe von dem Funkteil einer der Basisstationen erzeugte Funkleistung aufweist. Auf diese Weise kann jeder der Basisstationen ein ausgeleuchteter Raum zugeordnet werden, der von einem Standort der Basisstation abhängig ist.

Die zumindest teilweise Deaktivierung des zumindest einen der Funkteile der zumindest zwei Basisstationen wird als eine Unterschreitung einer für eine permanente Sichtbarkeit notwendigen Anzahl von als Downlink-Broadcast-Bearer ("Dummy-Bearer") ausgebildeten Funksignalen von zwei Funksignalen in einem Abstand von mindestens drei Zeitschlitzen auf ein einziges Funksignal jeder Basisstation ausgeführt, wobei die beiden Funksignale der beiden zumindest teilweise überlappende Raumbereiche ausleuchtenden Funkteile der beiden Basisstationen einen gegenseitigen Abstand von mindestens drei Zeitschlitzen einhalten.

Dadurch ist es vorteilhaft möglich, eine Verringerung einer spektralen Last und eine Absenkung eines Energieverbrauchs bei gleichzeitiger Bereitstellung einer ausreichenden Übertragungskapazität in Form von Telekommunikationsverbindungen zu erreichen, wobei die zumindest teilweise Deaktivierungen der Basisstationen derart ausgeführt werden können, dass die Basisstationen weiterhin dem zumindest einen Mobilteil ihre Existenz und die Bereitschaft zur Kommunikation anzeigen.

Bei einem bevorzugten Ausführungsbeispiel ist vorgesehen, dass das verwendete kombinierte TDMA/FDMA-Verfahren mit einem Verfahren gemäß einem DECT-Derivatstandard vereinbar ist, wodurch eine Kompatibilität des Verfahrens mit einem und eine Anwendbarkeit auf einen weit verbreiteten Standard der Telekommunikation erreicht werden kann.

Um diese Vorteile zu erzielen, ist bevorzugt vorgesehen, dass in dem Verfahren folgende Schritte durchgeführt werden:

- Feststellen der Kapazitätsauslastungen der Basisstationen
- Vergleich der festgestellten Kapazitätsauslastungen mit zumindest einem vorbestimmten Schwellwert
- zumindest teilweises Deaktivieren des Funkteils zumindest einer Basisstation im Falle einer Unterschreitung des vorbestimmten Schwellwerts durch zumindest eine der festgestellten Kapazitätsauslastungen

Besonders bevorzugt wird außerdem ein Ausführungsbeispiel eines Verfahrens, bei dem folgende Schritte ausgeführt werden:

- Feststellen der Kapazitätsauslastungen der Basisstationen
- Vergleich der festgestellten Kapazitätsauslastungen mit dem zumindest einen vorbestimmten Schwellwert
- Aktivieren eines zuvor zumindest teilweise deaktivierten Funkteils zumindest einer Basisstation im Falle einer Überschreitung des zumindest einen vorbestimmten Schwellwerts durch zumindest eine der festgestellten Kapazitätsauslastungen

Durch diese Verfahrensschritte kann eine vorteilhafte Steuerung erzielt werden, die abhängig vom Bedarfsfall eingerichtet werden kann, so dass so viel Übertragungskapazität wie nötig bereitgestellt und gleichzeitig so viel Energie eingespart und die spektrale Last durch Funksignale so tief wie möglich abgesenkt werden kann.

Bei einem besonders bevorzugten Ausführungsbeispiel ist vorgesehen, dass die zumindest teilweise Deaktivierung zumindest einer der Basisstationen abhängig von einem Betriebszustand der zumindest einen anderen Basisstation eingerichtet wird. Bei einer geeigneten Ausgestaltung können teilweise Deaktivierungen der Basisstationen derart ausgeführt werden, dass immer zumindest eine der Basisstationen dem zumindest einen Mobilteil seine Existenz und die Bereitschaft zur Kommunikation anzeigen kann.

In einer Weiterbildung der Erfindung ist vorgesehen, dass die Verfahrensschritte in periodischen Zeitabständen ausgeführt werden. Dadurch kann eine schnelle Anpassung an einen momentanen Zustand einer angeforderten Übertragungskapazität erreicht werden, ohne für einen Benutzer eine Beschneidung eines Bedienkomforts in Kauf nehmen zu müssen.

Bei einem besonders bevorzugten Ausführungsbeispiel ist vorgesehen, dass die Verfahrensschritte durch eine der zumindest zwei Basisstationen ausgeführt werden, wozu zwischen den Basisstationen eine Datenübertragungsverbindung eingerichtet ist. Dadurch kann das Verfahren in einer geräte- und teileeinsparenden Weise realisiert werden. Die Datenübertragungsverbindung ist bevorzugt kabellos ausgebildet. Grundsätzlich kann sie aber auch kabelgebunden ausgeführt sein.

Hinsichtlich einer konkreten Ausführungsform wird eine funkgesteuerte Telekommunikationsvorrichtung bevorzugt, bei der ein kombiniertes TDMA/FDMA-Verfahren verwendet wird, und das zumindest ein Mobilteil umfasst und zumindest zwei Basisstationen mit jeweils einem Funkteil und einem Empfangsteil aufweist, deren Funkteile sich zumindest teilweise überlappende Raumbereiche ausleuchten. Dabei ist das zumindest eine Mobilteil dazu vorgesehen, zu einer Bildung einer funkgesteuerten Telekommunikationsverbindung ein Funksignal einer der beiden Basisstationen auszuwerten. In zumindest einem Betriebszustand, abhängig von einer Kapazitätsauslastung der Basisstationen, ist zumindest ein Funkteil einer der zumindest zwei Basisstationen zumindest teilweise deaktiviert und das Funkteil einer anderen der zumindest zwei Basisstationen aktiviert.

Die zumindest teilweise Deaktivierung des zumindest einen der Funkteile der zumindest zwei Basisstationen ist als eine Unterschreitung einer für eine permanente Sichtbarkeit notwendigen Anzahl von als Downlink-Broadcast-Bearer ("Dummy-Bearer") ausgebildeten Funksignalen von zwei Funksignalen in einem Abstand von mindestens drei Zeitschlitzen auf ein ein ziges Funksignal jeder Basisstation ausgebildet, wobei die beiden Funksignale der beiden zumindest teilweise überlappende Raumbereiche ausleuchtenden Funkteile der beiden Basisstationen einen gegenseitigen Abstand von mindestens drei Zeitschlitzen einhalten.

Ein einfacher Zugriff und eine einfache und schnelle Entscheidung über die zumindest teilweise Deaktivierung eines der Funkteile der beiden Basisstationen kann erreicht werden, wenn zumindest ein vorbestimmter Schwellwert einer Kapazitätsauslastung in zumindest einer der Basisstationen hinterlegt ist.

Bei einem besonders bevorzugten Ausführungsbeispiel ist die funkgesteuerte Telekommunikationsvorrichtung mit einer zentralen Steuereinheit und einer Datenübertragungsverbindung zwischen der zentralen Steuereinheit und den Basisstationen ausgestattet, wobei die zentrale Steuereinheit dazu vorgesehen ist, zumindest eines der oben genannten Verfahren durchzuführen. Dadurch kann eine schnellere Entscheidung über die zumindest teilweise Deaktivierung erreichbar sein. Ferner kann eine zusätzliche Belastung einer Steuerungskapazität einer der Basisstationen vermieden werden, und es ist keine Sonderausstattung einer der Basisstationen der funkgesteuerte Telekommunikationsvorrichtung nötig, die dadurch in gleicher Weise ausgeführt sein können. In einer derartigen Ausführung kann der zumindest eine vorbestimmte Schwellwert der Kapazitätsauslastung vorteilhaft in der zentralen Steuereinheit hinterlegt sein. Die Datenübertragungsverbindung ist bevorzugt kabellos ausgebildet. Grundsätzlich kann sie aber auch kabelgebunden ausgeführt sein.

Weitere vorteilhafte Ausgestaltungen ergeben sich aus den Unteransprüchen.

Die Erfindung wird nachfolgend anhand von Ausführungsbeispielen mit Bezug auf die Zeichnung näher erläutert. Es zeigen:

Figur 1    eine schematische Darstellung einer funkgesteuerten Telekommunikationsvorrichtung mit einer zentralen Steuereinheit, mehreren Mobilteilen und drei Basisstationen,

Figur 2    eine Darstellung von Funksignalen einer funkgesteuerten Telekommunikationsvorrichtung gemäß einem Verfahren des Stands der Technik,

Figur 3    eine Darstellung von Funksignalen des erfindungsgemäßen Verfahrens zum Betrieb der funkgesteuerten Telekommunikationsvorrichtung gemäß der Fig. 1, und

Figur 4    eine Darstellung von Funksignalen einer alternativen Ausführung des erfindungsgemäßen Verfahrens zum Betrieb der funkgesteuerten Telekommunikationsvorrichtung gemäß der Fig. 1.

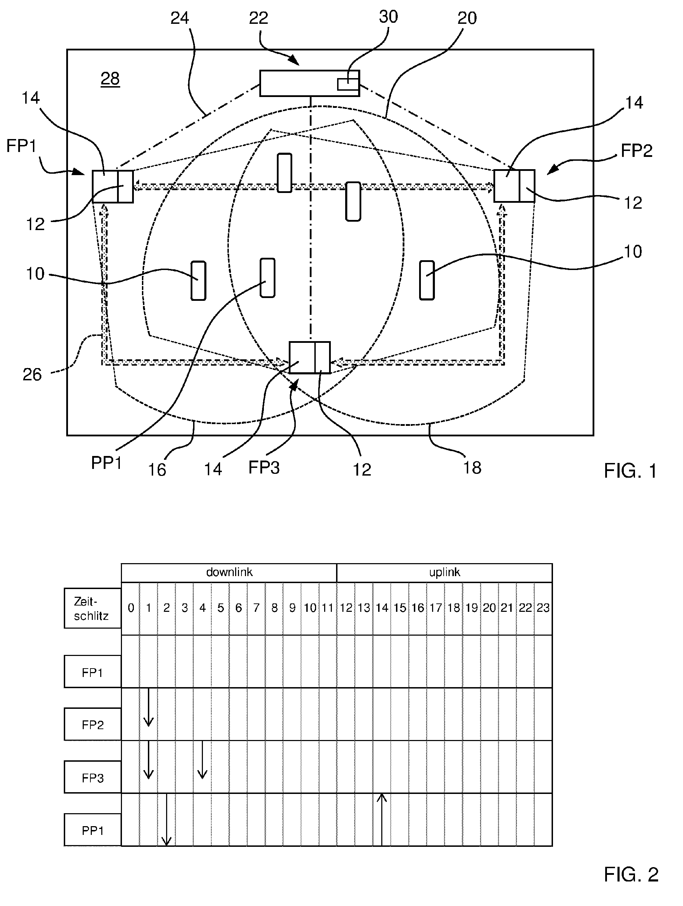

Figur 1 zeigt eine funkgesteuerte Telekommunikationsvorrichtung mit mehreren als anschlusskabelfreies Telefon (sogen. "schnurloses" Telefon) ausgebildeten Mobilteilen 10, PP1 und drei Basisstationen FP1, FP2, FP3. Die drei Basisstationen FP1, FP2, FP3 weisen jeweils ein Funkteil 12 und ein Empfangsteil 14 auf und sind derart in einem Raum 28 angeordnet, dass die Funkteile 12 ihnen zugeordnete Raumbereiche 16, 18, 20 ausleuchten, die sich teilweise überlappen. Die Mobilteile 10, PP1 sind speziell dazu ausgestattet, zur Bildung einer funkgesteuerten Telekommunikationsverbindung ein Funksignal einer der Basisstationen FP1, FP2, FP3 auszuwerten.

Die funkgesteuerte Telekommunikationsvorrichtung ist dazu vorgesehen, zu einer Kommunikation zwischen einem der Mobilteile 10, PP1 und einer der drei Basisstationen FP1, FP2, FP3 ein kombiniertes TDMA/FDMA-Verfahren zu verwenden, das mit einem Verfahren gemäß einem DECT-Derivatstandard vereinbar ist.

Zur Veranschaulichung sollen zunächst Funksignale eines Verfahrens zum Betrieb einer funkgesteuerten Telekommunikationsvorrichtung gemäß dem Stand der Technik anhand einer Darstellung in Fig. 2 erläutert werden. Diese Funksignale erfüllen den DECT-Standard, der in der Telekommunikationsnorm ETSI EN 300 175 festgelegt ist.

Der DECT-Standard sieht zur Kommunikation eine Folge von 24 Zeitschlitzen (0-23) vor, die je eine zeitliche Dauer von 416 μs aufweisen, so dass die 24 aufeinanderfolgenden Zeitschlitze einen sogenannten Rahmen von 10 ms bilden. Die Datenübertragung erfolgt durch aufeinanderfolgende Rahmen. Die ersten zwölf Zeitschlitze sind einer Kommunikation von einer Basisstation FP1, FP2, FP3 in Richtung eines Mobilteils 10, PP1 ("downlink") zugeordnet, die zweiten zwölf Zeitschlitze dienen einer Kommunikation von einem Mobilteil 10, PP1 in Richtung einer Basisstation FP1, FP2, FP3 ("uplink"). In jedem Zeitschlitz kann eine Datenübertragung auf einer Trägerfrequenz $f_n$

$$f_n = 1897{,}344 \text{ MHz} - n \cdot 1{,}728 \text{ MHz}$$

mit n = 0-9
stattfinden, so dass grundsätzlich 240 Übertragungskanäle in diesem kombinierten TDMA/FDMA-Verfahren zur Verfügung stehen.

Bei einer Vollduplex-Telekommunikationsverbindung zwischen einem der Mobilteile 10, PP1 und einer der Basisstationen FP1, FP2, FP3 sendet die Basisstation FP1, FP2, FP3 im Zeitschlitz m und das Mobilteil 10, PP1 im Zeitschlitz m + 12. In der Fig. 2 bilden das Mobilteil PP1 und die Basisstation FP3 eine Vollduplex-Telekommunikationsverbindung. Die Basisstation FP3 sendet im Zeitschlitz 2 und das Mobilteil PP1 sendet im Zeitschlitz 2 + 12 = 14, was in der Fig. 2 jeweils durch einen Pfeil symbolisiert ist, der von einer Quelle der Datenübertragung ausgeht und an einer Senke der Datenübertragung endet.

Gemäß dem DECT-Standard können die Mobilteile 10, PP1 die Auswahl des Zeitschlitzes ändern und auf einer anderen Frequenz senden, wenn beispielsweise die Frequenz der bestehenden Telekommunikationsverbindung gestört ist. Die Mobilteile 10, PP1 entscheiden selbsttätig über die verwendete Frequenz und den verwendeten Zeitschlitz, wobei sie von der Basisstation FP1, FP2, FP3 unterstützt werden können. Sowohl die Mobilteile 10, PP1 als auch die Basisstationen FP1, FP2, FP3 können dazu eine Liste von Kanälen mit guter Signalstärke führen, die in periodischen Abständen aktualisiert werden kann.

Bei Vorhandensein mehrerer Basisstationen FP1, FP2, FP3, die, wie in der Fig. 1 gezeigt, teilweise überlappende Raumbereiche 16, 18, 20 ausleuchten, kann jedes der Mobilteile 10, PP1 auch einen Wechsel von einer bestehenden Telekommunikationsverbindung mit einer der drei Basisstationen FP1, FP2, FP3 zu einer anderen der drei Basisstationen FP1, FP2, FP3 auswählen. Die Basisstationen FP1, FP2, FP3 senden zur Erkennung durch das Mobilteil 10, PP1 dazu ein Funksignal ("Dummy-Bearer") aus. Das Mobilteil 10, PP1 ist dazu vorgesehen, zu einer Bildung einer funkgesteuerten Telekommunikationsverbindung eines der Funksignale einer der Basisstationen FP1, FP2, FP3 auszuwerten.

Das in der Fig. 2 dargestellte Mobilteil PP1 besitzt eine langsame Kanalwechselfunktion ("slow hopping") und kann daher ein Funksignal ("Dummy-Bearer") einer Basisstation FP1, FP2, FP3 nicht erkennen, wenn dieses in einem Zeitschlitz gesendet wird, der zeitlich unmittelbar vor oder hinter dem Zeitschlitz liegt, auf dem die Basisstation FP1, FP2, FP3 sendet, mit der eine Vollduplex-Telekommunikationsverbindung besteht. Das Funksignal der Basisstation FP1 und eines der Funksignale der Basisstation FP2, die beide im Zeitschlitz 1 gesendet werden, sind für das Mobilteil PP1 nicht erkennbar. Der DECT-Standard sieht deshalb vor, dass jede der Basisstationen FP1, FP2 ein zweites Funksignal aussendet (in der Fig. 2 für die Basisstation FP1 nicht dargestellt), das einen Abstand von mindestens drei Zeitschlitzen zum ersten Funksignal aufweist. Dieses für das Mobilteil PP1 sichtbare Funksignal der Basisstation FP2 ist in der Fig. 2 im Zeitschlitz 4 durch einen von einer Ebene der Basisstation FP2 ausgehenden Pfeil angedeutet.

Gemäß dem bisherigen Verfahren des Stands der Technik senden somit in der in der Figur 1 gezeigten Situation alle drei Basisstationen FP1, FP2, FP3 Funksignale aus. Dies gilt insbesondere auch in der in der Fig. 2 dargestellten Situation mit relativ geringer Kapazitätsauslastung durch das einzelne Mobilteil PP1.

Im Folgenden wird das erfindungsgemäße Verfahren anhand einer Darstellung von Funksignalen der funkgesteuerten Telekommunikationsvorrichtung gemäß der Fig. 1 erläutert.

Die in der Fig. 1 gezeigte funkgesteuerte Telekommunikationsvorrichtung umfasst weiterhin eine zentrale Steuereinheit 22 ("fixed part controller") und eine Datenübertragungsverbindung 24 zwischen der zentralen Steuereinheit 22 und den Basisstationen FP1, FP2, FP3, die als kabellose Funkverbindung ausgebildet ist.

In der zentralen Steuereinheit 22 ist hinterlegt, dass die Funkteile 12 der Basisstationen FP1, FP2, FP3 sich teilweise überlappende Raumbereiche 16, 18, 20 ausleuchten. Es ist daher grundsätzlich vorgesehen, dass jedes der Mobilteile 10, PP1 mit jeder der drei Basisstationen FP1, FP2, FP3 eine funkgesteuerte Telekommunikationsverbindung bilden kann, um im Raum 28 für einen Bedarfsfall eine besonders große Übertragungskapazität bereitstellen zu können.

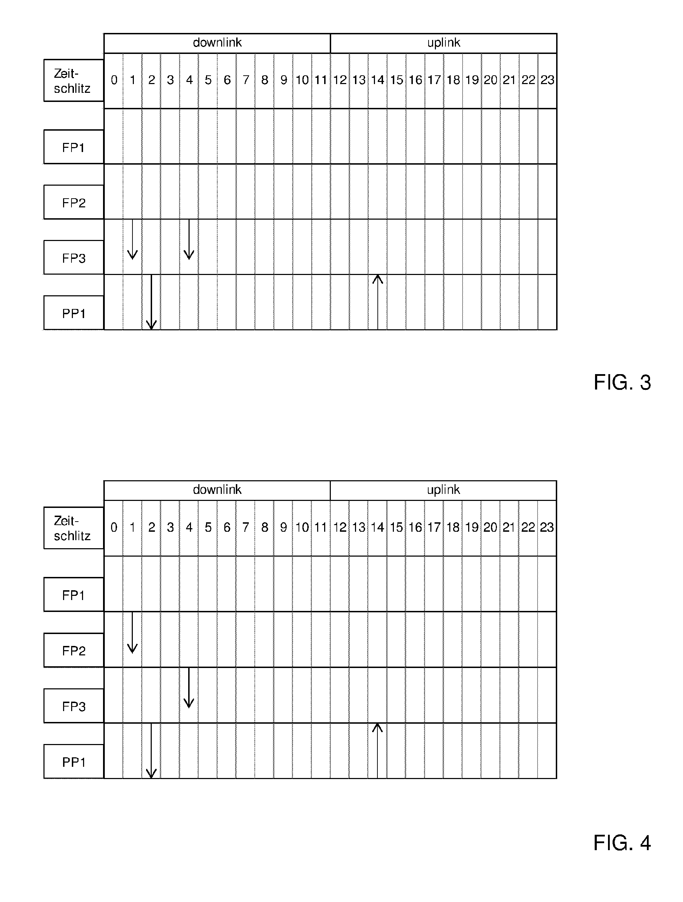

Fig. 3 zeigt eine Darstellung von Funksignalen des erfindungsgemäßen Verfahrens zum Betrieb der funkgesteuerten Telekommunikationsvorrichtung gemäß der Fig. 1. Das Mobilteil PP1 und die Basisstation FP3 bilden eine Vollduplex-Telekommunikationsverbindung. Die Basisstation FP3 sendet im Zeitschlitz 2 und das Mobilteil PP1 im Zeitschlitz 14.

Die Steuereinheit 22 stellt mittels der Datenübertragungsverbindung 24 zu den Basisstationen FP1, FP2, FP3 deren aktuelle Kapazitätsauslastung in periodischen Zeitabständen von 160 ms fest und vergleicht diese mit einem vorbestimmten Schwellwert der Kapazitätsauslastung, der in einem Speicherelement 30 der zentralen Steuereinheit 22 hinterlegt ist.

In der in der Fig. 3 dargestellten Situation liegen die aktuellen Kapazitätsauslastungen der Basisstationen FP1, FP2, FP3 unterhalb des hinterlegten Schwellwerts. In diesem Betriebszustand, in dem die festgestellten Kapazitätsauslastungen den vorbestimmten Schwellwert unterschreiten, wird das Funkteil 12 einer der Basisstationen FP1, FP2, FP3, im dargestellten Fall das Funkteil 12 der Basisstation FP1, durch die zentrale Steuereinheit 22 teilweise deaktiviert, so dass die Basisstation FP1 kein Funksignal sendet und für die Mobilteile 10, PP1 nicht erkennbar ist. Die Funkteile 12 der Basisstationen FP2 und FP3 bleiben weiterhin aktiviert. Dabei sendet das Funkteil 12 der Basisstation FP2 zwei Funksignale im Abstand von drei Zeitschlitzen aus und ist somit auch für das "slow hopping"-Mobilteil PP1 erkennbar. Gegenüber dem aus dem Stand der Technik bekannten Verfahren verringert sich eine spektrale Last und eine Energieverbrauch der funkgesteuerten Telekommunikationsvorrichtung, ohne dass die für einen Benutzer sichtbare Übertragungskapazität eingeschränkt ist.

Steigt die Kapazitätsauslastung der Basisstationen FP1, FP2, FP3 mit aktiviertem Funkteil 12 an und überschreitet den in der zentralen Steuereinheit 22 hinterlegten Schwellwert der Kapazitätsauslastung, wird das zuvor teilweise deaktivierte Funkteil 12 der Basisstation FP1 durch die zentrale Steuereinheit 22 wieder aktiviert und sendet ein Funksignal, so dass die Basisstation FP1 für die Mobilteile 10, PP1 wieder erkennbar ist.

In Fig. 4 ist eine Darstellung von Funksignalen einer alternativen Ausführung des erfindungsgemäßen Verfahrens zum Betrieb der funkgesteuerten Telekommunikationsvorrichtung wiedergegeben. Im Folgenden werden nur die Unterschiede zu dem ersten beschriebenen Verfahren erläutert.

Wie im Verfahren gemäß der Fig. 3 bilden das Mobilteil PP1 und die Basisstation FP3 eine Vollduplex-Telekommunikationsverbindung; dabei sendet die Basisstation FP3 im Zeitschlitz 2 und das Mobilteil PP1 im Zeitschlitz 14. Zusätzlich zu der bereits beschriebenen Feststellung der aktuellen Kapazitätsauslastung der Basisstationen FP1, FP2, FP3 in periodischen Zeitabständen von 160 ms bestimmt die zentrale Steuereinheit 22 mittels der Datenübertragungsverbindung 24 zu den Basisstationen FP1, FP2, FP3 Positionen der Zeitschlitze, auf denen die Basisstationen FP1, FP2, FP3 Funksignale aussenden und stellt Daten bezüglich der Positionen der Zeitschlitze allen Basisstationen FP1, FP2, FP3 zur Verfügung.

In der in der Fig. 4 dargestellten Situation wird durch einen Vergleich mit dem zumindest einen vorbestimmten Schwellwert, der im Speicherelement 30 der zentralen Steuereinheit 22 hinterlegt ist, festgestellt, dass die aktuellen Kapazitätsauslastungen der Basisstationen FP1, FP2, FP3 unterhalb des Schwellwerts liegen.

Daraufhin erfolgt ein teilweises Deaktivieren der Funkteile 12 der Basisstationen FP1, FP2, FP3 derart, dass die teilweise Deaktivierung des Funkteils 12 der einen Basisstation FP1, FP2, FP3 abhängig von einem Betriebszustand der anderen Basisstation FP1, FP2, FP3 eingerichtet wird.

Da das Mobilteil PP1 vom Typ "slow hopping" ist, werden Funksignale der Basisstationen FP1, FP2 von dem Mobilteil PP1 nicht erkannt, wenn sie in den Zeitschlitzen gesendet werden, die sich unmittelbar neben dem Zeitschlitz befinden, auf dem die Basisstation FP3 sendet, mit dem das Mobilteil PP1 die Vollduplex-Telekommunikationsverbindung bildet; in dem gezeigten Fall sind dies die Zeitschlitze 1 und 3. Im Unterschied zu dem Verfahren nach dem Stand der Technik, nach dem die Basisstationen FP1, FP2 jeweils zwei Funksignale im zeitlichen Abstand von mindestens drei Zeitschlitzen aussenden müssten, werden die Funkteile 12 der Basisstationen FP1, FP2 teilweise deaktiviert, so dass die beiden Basisstationen FP1, FP2 nur je ein Funksignal aussenden, die zueinander einen Abstand von mindestens drei Zeitschlitzen aufweisen. Die Steuereinheit 22 ist dazu vorgesehen, auf der Grundlage der festgestellten Position des Zeitschlitzes des Funksignals einer der beiden Basisstationen FP1, FP2 einen Zeitschlitz zu bestimmen, auf dem die andere der beiden Basisstationen FP1, FP2 ein Funksignal aussenden soll, und die Basisstation FP1, FP2 in entsprechender Weise anzusteuern. Dadurch, dass die teilweise Deaktivierung des Funkteils 12 einer der Basisstationen FP1, FP2 abhängig von einem Betriebszustand der anderen Basisstation FP1, FP2 eingerichtet wird, kann gewährleistet werden, dass zu jeder Zeit zumindest ein Funksignal einer weiteren Basisstation FP1, FP2 für das Mobilteil PP1 erkennbar ist.

Wie ein Vergleich der Figuren 2 und 4 deutlich macht, ist auch bei diesem alternativen Verfahren gegenüber dem aus dem Stand der Technik bekannten Verfahren eine spektrale Last und ein Energieverbrauch der funkgesteuerten Telekommunikationsvorrichtung verringert, ohne dass die für einen Benutzer sichtbare Übertragungskapazität eingeschränkt ist.

Grundsätzlich kann die funkgesteuerte Telekommunikationsvorrichtung auch ohne eine zentrale Steuereinheit 22 betrieben werden, wenn der vorbestimmte Schwellwert einer Kapazitätsauslastung in zumindest einer der Basisstationen FP1, FP2, FP3 hinterlegt ist und wenn die Verfahrensschritte durch diese eine der drei Basisstationen FP1, FP2, FP3 ausgeführt wird, wozu zwischen den Basisstationen FP1, FP2, FP3 eine geeignete Datenübertragungsverbindung 26 (in Fig. 1 mit gestrichelter Linie dargestellt) eingerichtet ist.

## Patentansprüche

1. Verfahren zum Betrieb zumindest eines Mobilteils (10, PP1) mit einer von zumindest zwei Basisstationen (FP1, FP2, FP3), die jeweils ein Funkteil (12) und ein Empfangsteil (14) aufweisen, wobei die Funkteile (12) sich zumindest teilweise überlappende Raumbereiche (16, 18, 20) ausleuchten, zur Bildung einer funkgesteuerten Telekommunikationsverbindung unter Verwendung eines kombinierten TDMA/FDMA-Verfahrens, wobei eine zumindest teilweise Deaktivierung zumindest eines der Funkteile (12) der zumindest zwei Basisstationen (FP1, FP2, FP3) abhängig von einer ermittelten Kapazitätsauslastung der Basisstationen (FP1, FP2, FP3) erfolgt, **dadurch gekennzeichnet, dass** die zumindest teilweise Deaktivierung des zumindest einen der Funkteile (12) der zumindest zwei Basisstationen (FP1, FP2, FP3) als eine Unterschreitung einer für eine permanente Sichtbarkeit notwendigen Anzahl von als Downlink-Broadcast-Bearer ausgebildeten Funksignalen von zwei Funksignalen in einem Abstand von mindestens drei Zeitschlitzen auf ein einziges Funksignal jeder Basisstation (FP1, FP2, FP3) ausgeführt wird, wobei die beiden Funksignale der beiden zumindest teilweise überlappende Raumbereiche (16, 18, 20) ausleuchtenden Funkteile (12) der beiden Basisstationen (FP1, FP2, FP3) einen gegenseitigen Abstand von mindestens drei Zeitschlitzen einhalten.

2. Verfahren nach Anspruch 1, **dadurch gekennzeichnet, dass** das verwendete kombinierte TDMA/FDMA-Verfahren mit einem Verfahren gemäß einem DECT-Derivatstandard vereinbar ist.

3. Verfahren nach Anspruch 1 oder 2, **gekennzeichnet durch** folgende Schritte:

   - Feststellen der Kapazitätsauslastungen der Basisstationen (FP1, FP2, FP3)
   - Vergleich der festgestellten Kapazitätsauslastungen mit zumindest einem vorbestimmten Schwellwert
   - zumindest teilweises Deaktivieren des Funkteils (12) zumindest einer Basisstation (FP1, FP2, FP3) im Falle einer Unterschreitung des vorbestimmten Schwellwerts **durch** zumindest eine der festgestellten Kapazitätsauslastungen

4. Verfahren nach Anspruch 1 oder 2, **gekennzeichnet durch** folgende Schritte:

   - Feststellen der Kapazitätsauslastungen der Basisstationen (FP1, FP2, FP3)
   - Vergleich der festgestellten Kapazitätsauslastungen mit dem zumindest einen vorbestimmten Schwellwert
   - Aktivieren eines zuvor zumindest teilweise deaktivierten Funkteils (12) zumindest einer Basisstation (FP1, FP2, FP3) im Falle einer Überschreitung des zumindest einen vorbestimmten Schwellwerts **durch** zumindest eine der festgestellten Kapazitätsauslastungen

5. Verfahren nach einem der vorhergehenden Ansprüche, **dadurch gekennzeichnet, dass** die zumindest teilweise Deaktivierung zumindest einer der Basisstationen (FP1, FP2, FP3) abhängig von einem Betriebszustand der zumindest einen anderen Basisstation (FP1, FP2, FP3) eingerichtet wird.

6. Verfahren nach einem der vorhergehenden Ansprüche, **dadurch gekennzeichnet, dass** die Verfahrensschritte in periodischen Zeitabständen ausgeführt werden.

7. Verfahren nach einem der vorhergehenden Ansprüche, **dadurch gekennzeichnet, dass** die Verfahrensschritte durch eine der zumindest zwei Basisstationen (FP1, FP2, FP3) ausgeführt werden, wozu zwischen den Basisstationen (FP1, FP2, FP3) eine Datenübertragungsverbindung (26) eingerichtet ist.

8. Funkgesteuerte Telekommunikationsvorrichtung unter Verwendung eines kombinierten TDMA/FDMA-Verfahrens, umfassend:

   zumindest ein Mobilteil (10, PP1),
   zumindest zwei Basisstationen (FP1, FP2, FP3), die jeweils ein Funkteil (12) und ein Empfangsteil (14) aufweisen, und deren Funkteile (12) sich zumindest teilweise überlappende Raumbereiche (16, 18, 20) ausleuchten, wobei das zumindest eine Mobilteil (10, PP1) dazu vorgesehen ist, zu einer Bildung einer funkgesteuerten Telekommunikationsverbindung ein Funksignal einer der beiden Basisstationen (FP1, FP2, FP3) auszuwerten, und wobei in zumindest einem Betriebszustand, abhängig von einer Kapazitätsauslastung der Basisstationen (FP1, FP2, FP3), zumindest ein Funkteil (12) einer der zumindest zwei Basisstationen (FP1, FP2, FP3) zumindest teilweise deaktiviert und das Funkteil (12) einer anderen der zumindest zwei Basisstationen (FP1, FP2, FP3) aktiviert ist,
   **dadurch gekennzeichnet, dass** die zumindest teilweise Deaktivierung des zumindest einen der Funkteile (12) der zumindest zwei Basisstationen (FP1, FP2, FP3) als eine Unterschreitung einer für eine permanente Sichtbarkeit notwendigen Anzahl von als Downlink-Broadcast-Bearer ausgebildeten Funksignalen von zwei Funksignalen in einem Abstand von mindestens drei Zeitschlitzen auf ein einziges Funksignal jeder Basisstation (FP1, FP2, FP3) ausgebildet ist, wobei die beiden Funksignale der beiden zumindest teilweise überlappende Raumbereiche (16, 18, 20) ausleuchtenden Funkteile (12) der beiden Basisstationen (FP1, FP2, FP3) einen gegenseitigen Abstand von mindestens drei Zeitschlitzen einhalten.

9. Funkgesteuerte Telekommunikationsvorrichtung nach Anspruch 8, **dadurch gekennzeichnet, dass** zumindest ein vorbestimmter Schwellwert einer Kapazitätsauslastung in zumindest einer der Basisstationen (FP1, FP2, FP3) hinterlegt ist.

10. Funkgesteuerte Telekommunikationsvorrichtung nach Anspruch 8 oder 9, **gekennzeichnet durch** eine zentrale Steuereinheit (22) und eine Datenübertragungsverbindung (24) zwischen der zentralen Steuereinheit (22) und den Basisstationen (FP1, FP2, FP3), wobei die zentrale Steuereinheit (22) dazu vorgesehen ist, zumindest eines der Verfahren nach einem der Ansprüche 1 bis 7 durchzuführen.

**11.** Funkgesteuerte Telekommunikationsvorrichtung nach Anspruch 9, **dadurch gekennzeichnet, dass** der zumindest eine vorbestimmte Schwellwert der Kapazitätsauslastung in der zentralen Steuereinheit (22) hinterlegt ist.

**Claims**

**1.** Method for operating at least one mobile part (10, PP1) with one of at least two base stations (FP1, FP2, FP3), which each have a radio part (12) and a reception part (14), wherein the radio parts (12) illuminate at least partially overlapping spatial regions (16, 18, 20), to form a radio-controlled telecommunication link using a combined TDMA/FDMA method, wherein at least one of the radio parts (12) of the at least two base stations (FP1, FP2, FP3) is at least partially deactivated on the basis of an ascertained capacity utilisation level of the base stations (FP1, FP2, FP3), **characterized in that** the at least partial deactivation of the at least one of the radio parts (12) of the at least two base stations (FP1, FP2, FP3) is executed as a drop below a number, which is necessary for permanent visibility, of radio signals in the form of downlink broadcast bearers from two radio signals at an interval of at least three time slots to a single radio signal from each base station (FP1, FP2, FP3), wherein the two radio signals from the two radio parts (12), which illuminate at least partially overlapping spatial regions (16, 18, 20), of the two base stations (FP1, FP2, FP3) observe a mutual interval of at least three time slots.

**2.** Method according to Claim 1, **characterized in that** the combined TDMA/FDMA method used can be combined with a method based on a DECT derivative standard.

**3.** Method according to Claim 1 or 2, **characterized by** the following steps:

- establishment of the capacity utilisation levels of the base stations (FP1, FP2, FP3),
- comparison of the established capacity utilisation levels with at least one predetermined threshold value,
- at least partial deactivation of the radio part (12) of at least one base station (FP1, FP2, FP3) if at least one of the established capacity utilisation levels drops below the predetermined threshold value.

**4.** Method according to Claim 1 or 2, **characterized by** the following steps:

- establishment of the capacity utilisation levels of the base stations (FP1, FP2, FP3),
- comparison of the established capacity utilisation levels with the at least one predetermined threshold value,
- activation of a previously at least partially deactivated radio part (12) of at least one base station (FP1, FP2, FP3) if at least one of the established capacity utilisation levels exceeds the at least one predetermined threshold value.

**5.** Method according to one of the preceding clams, **characterized in that** the at least partial deactivation of at least one of the base stations (FP1, FP2, FP3) is set up on the basis of an operating state of the at least one other base station (FP1, FP2, FP3).

**6.** Method according to one of the preceding claims, **characterised in that** the method steps are executed at periodic intervals of time.

**7.** Method according to one of the preceding claims, **characterized in that** the method steps are executed by one of the at least two base stations (FP1, FP2, FP3), to which end a data transmission link (26) is set up between the base stations (FP1, FP2, FP3).

**8.** Radio-controlled telecommunication apparatus using a combined TDMA/FDMA method, comprising:

at least one mobile part (10, PP1),
at least two base stations (FP1, FP2, FP3), which each have a radio part (12) and a reception part (14), and the radio parts (12) of which illuminate at least partially overlapping spatial regions (16, 18, 20), wherein the at least one mobile part (10, PP1) is provided for the purpose of evaluating a radio signal from one of the two base stations (FP1, FP2, FP3) to form a radio-controlled telecommunication link, and wherein in at least one operating state, on the basis of a capacity utilisation level of the base stations (FP1, FP2, FP3), at least one radio part (12) of one of the at least two base stations (FP1, FP2, FP3) is at least partially deactivated and the radio part (12) of another of the at least two base stations (FP1, FP2, FP3) is activated, **characterized in that** the at least partial deactivation of the at least one of the radio parts (12) of the at least two base stations (FP1, FP2, FP3) is in the form of a drop below a number, which is necessary for permanent visibility, of radio signals in the form of downlink broadcast bearers from two radio signals at an interval of at least three time slots to a single radio signal from each base station (FP1, FP2, FP3), wherein the two radio signals from the two radio parts (12), which illuminate at least partially overlapping spatial regions (16, 18, 20), of the two base stations (FP1, FP2, FP3) observe a mutual interval of at least three time slots.

9. Radio-controlled telecommunication apparatus according to Claim 8, **characterized in that** at least one predetermined threshold value for a capacity utilisation level is stored in at least one of the base stations (FP1, FP2, FP3).

10. Radio-controlled telecommunication apparatus according to Claim 8 or 9, **characterized by** a central control unit (22) and a data transmission link (24) between the central control unit (22) and the base stations (FP1, FP2, FP3), wherein the central control unit (22) is provided for the purpose of performing at least one of the methods according to one of Claims 1 to 7.

11. Radio-controlled telecommunication apparatus according to Claim 9, **characterized in that** the at least one predetermined threshold value for the capacity utilisation level is stored in the central control unit (22).

## Revendications

1. Procédé pour faire fonctionner au moins une partie mobile (10, PP1) avec l'une d'au moins deux stations de base (FP1, FP2, FP3), qui comportent chacune une partie radio (12) et une partie de réception (14), dans lequel les parties de radio (12) éclairent des régions spatiales se chevauchant au moins partiellement (16, 18, 20) pour former une liaison de télécommunication radiocommandée utilisant un procédé TDMA/FDMA combiné, dans lequel une désactivation au moins partielle d'au moins l'une des parties radio (12) des au moins deux stations de base (FP1, FP2, FP3) s'effectue en fonction d'un taux déterminé d'utilisation des capacités des stations de base (FP1, FP2, FP3), **caractérisé en ce que** la désactivation au moins partielle de l'au moins une des parties radio (12) des au moins deux stations de base (FP1, FP2, FP3) est établie sous la forme d'une diminution d'un nombre nécessaire pour une visibilité permanente de signaux radio réalisés sous la forme de supports de diffusion de liaison descendante, de deux signaux radio espacés d'au moins trois créneaux temporels à un signal radio unique de chaque station de base (FP1, FP2, FP3), dans lequel les deux signaux radio des deux parties radio (12) éclairant des régions spatiales se chevauchant au moins partiellement (16, 18, 20) des deux stations de base (FP1, FP2, FP3) sont mutuellement espacés d'au moins trois créneaux temporels.

2. Procédé selon la revendication 1, **caractérisé en ce que** le procédé TDMA/FDMA combiné utilisé est compatible avec un procédé respectant une norme dérivée du DECT.

3. Procédé selon la revendication 1 ou 2, **caractérisé par** les étapes suivantes :

   - déterminer les taux d'utilisation des capacités des stations de base (FP1, FP2, FP3),
   - comparer les taux déterminés d'utilisation des capacités à au moins un seuil prédéterminé,
   - désactiver au moins partiellement la partie radio (12) d'au moins une station de base (FP1, FP2, FP3) en cas de diminution en dessous du seuil prédéterminé d'au moins l'un des taux déterminés d'utilisation des capacités.

4. Procédé selon la revendication 1 ou 2, **caractérisé par** les étapes suivantes :

   - déterminer les taux d'utilisation des capacités des stations de base (FP1, FP2, FP3),
   - comparer les taux déterminés d'utilisation des capacités à au moins un seuil prédéterminé,
   - activer une partie radio (12) précédemment au moins partiellement désactivée d'au moins une station de base (FP1, FP2, FP3) en cas d'augmentation au-dessous de l'au moins un seuil prédéterminé de l'un des taux déterminés d'utilisation des capacités.

5. Procédé selon l'une quelconque des revendications précédentes, **caractérisé en ce que** la désactivation au moins partielle d'au moins l'une des stations de base (FP1, FP2, FP3) est mise en oeuvre en fonction d'un état de fonctionnement de l'au moins une autre station de base (FP1, FP2, FP3).

6. Procédé selon l'une quelconque des revendications précédentes, **caractérisé en ce que** les étapes du procédé sont exécutées à des intervalles de temps périodiques.

7. Procédé selon l'une quelconque des revendications précédentes, **caractérisé en ce que** les étapes du procédé sont exécutées par l'une des au moins deux stations de base (FP1, FP2, FP3), une liaison de transmission de données (26) étant établie à cet effet entre les stations de base (FP1, FP2, FP3).

8. Dispositif de télécommunication radiocommandé utilisant un procédé TDMA/FDMA combiné, comprenant :

   au moins une partie mobile (10, PP1),
   au moins deux stations de base (FP1, FP2, FP3) qui comportent respectivement une partie radio (12) et une partie de réception (14), et dont les parties radio (12) éclairent des régions spatiales se chevauchant au moins partiellement (16, 18, 20), dans lequel l'au moins une partie mobile (10, PP1) est prévue pour évaluer un signal radio de l'une des deux stations de base (FP1, FP2, FP3) pour l'établissement d'une liaison télécommunication radiocommandée, et dans lequel, dans au moins un état de fonctionnement, au moins une partie radio (12) de l'une des au moins deux stations de base (FP1, FP2, FP3) est désactivée au moins partiellement et la partie radio (12) d'une autre des au moins deux stations de base (FP1, FP2, FP3) est activée en fonction d'un taux d'utilisation des capacités des stations de base (FP1, FP2, FP3), **caractérisé en ce que** la désactivation au moins partielle de l'au moins une des parties radio (12) des au moins deux stations de base (FP1, FP2, FP3) est établie sous la forme d'une diminution d'un nombre nécessaire pour une visibilité permanente de signaux radio réalisés sous la forme de supports de diffusion de liaison descendante, de deux signaux radio espacés d'au moins trois créneaux temporels à un signal radio unique de chaque station de base (FP1, FP2, FP3), dans lequel les deux signaux radio des deux parties radio (12) éclairant des régions spatiales ce chevauchant au moins partiellement (16, 18, 20) des deux stations de base (FP1, FP2, FP3) sont mutuellement espacés d'au moins trois créneaux temporels.

9. Dispositif de télécommunication radiocommandé selon la revendication 8, **caractérisé en ce qu'**au moins un seuil prédéterminé d'un taux d'utilisation des capacités est stocké dans au moins l'une des stations de base (FP1, FP2, FP3).

10. Dispositif de télécommunication radiocommandé selon la revendication 8 ou 9, **caractérisé par** une unité centrale de commande (22) et par une liaison de transmission de données (24) entre l'unité centrale de commande (22) et les stations de base (FP1, FP2, FP3), dans lequel l'unité centrale de commande (22) est prévue pour mettre en oeuvre au moins l'un des procédés selon l'une des revendications 1 à 7.

11. Dispositif de télécommunication radiocommandé selon la revendication 9, **caractérisé en ce que** l'au moins un seuil prédéterminé du taux d'utilisation des capacités est stocké dans l'unité centrale de commande (22).

FIG. 1

| Zeit-schlitz | downlink | | | | | | | | | | | | uplink | | | | | | | | | | | |
|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| FP1 | | | | | | | | | | | | | | | | | | | | | | | | |
| FP2 | | ↓ | | | | | | | | | | | | | | | | | | | | | | |
| FP3 | | ↓ | | | ↓ | | | | | | | | | | | | | | | | | | | |
| PP1 | | | ↓ | | | | | | | | | | | | ↑ | | | | | | | | | |

FIG. 2

| Zeit-schlitz | downlink | | | | | | | | | | | | uplink | | | | | | | | | | | |
|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| FP1 | | | | | | | | | | | | | | | | | | | | | | | | |
| FP2 | | | | | | | | | | | | | | | | | | | | | | | | |
| FP3 | | | | | | | | | | | | | | | | | | | | | | | | |
| PP1 | | | | | | | | | | | | | | | | | | | | | | | | |

FIG. 3

| Zeit-schlitz | downlink | | | | | | | | | | | | uplink | | | | | | | | | | | |
|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| FP1 | | | | | | | | | | | | | | | | | | | | | | | | |
| FP2 | | | | | | | | | | | | | | | | | | | | | | | | |
| FP3 | | | | | | | | | | | | | | | | | | | | | | | | |
| PP1 | | | | | | | | | | | | | | | | | | | | | | | | |

FIG. 4

**IN DER BESCHREIBUNG AUFGEFÜHRTE DOKUMENTE**

**In der Beschreibung aufgeführte Patentdokumente**

- WO 0207464 A1
- US 20090290561 A1